# EUROPÄISCHE PATENTSCHRIFT

(11) **EP 4 096 984 B1**
(45) Veröffentlichungstag und Bekanntmachung des Hinweises auf die Patenterteilung: **19.02.2025**
(21) Anmeldenummer: 20830185.3
(22) Anmeldetag: 17.12.2020
(51) Int. Cl.: B62B 3/00, B62B 5/02

(54) **MOBILES TRANSPORTSYSTEM**
MOBILE TRANSPORT SYSTEM
SYSTÈME DE TRANSPORT MOBILE

(30) Priorität: 28.01.2020 DE 102020000522
(43) Veröffentlichungstag der Anmeldung: 07.12.2022
(73) Patentinhaber: SEW-EURODRIVE GmbH & Co. KG, 76646 Bruchsal (DE)
(72) Erfinder: MANZ, Friedrich, 76703 Kraichtal-Münzesheim (DE); KÖDDERITZSCH, Jan-Patrick, 76448 Durmersheim (DE); DAHL, Theodor, 76646 Bruchsal (DE); FRISCH, Joshua Gordon David, 76707 Hambrücken (DE)
(86) Internationale Anmeldenummer: PCT/EP2020/086751
(87) Internationale Veröffentlichungsnummer: WO 2021/151587

(56) Entgegenhaltungen:
- EP-A1- 3 130 522
- EP-A2- 2 236 391
- EP-B1- 3 130 522
- DE-A1- 102017 201 108
- DE-A1- 102017 221 375

## Beschreibung

Die Erfindung betrifft ein mobiles Transportsystem zum Transport von Gegenständen in einer technischen Anlage, welches einen Fahrzeugrahmen, ein erstes Räderpaar, ein zweites Räderpaar und ein drittes Räderpaar mit jeweils zwei Rädern, welche relativ zu dem Fahrzeugrahmen drehbar sind, und einen Pendelrahmen, welcher um eine in Querrichtung verlaufende Pendelachse relativ zu dem Fahrzeugrahmen schwenkbar ist, umfasst.

In technischen Anlagen, beispielsweise in Produktionswerken, werden mobile Transportsysteme, insbesondere autonom fahrende mobile Transportsysteme, zum Transport von Gegenständen, beispielsweise Kleinteilen oder Kisten eingesetzt. Die besagten mobilen Transportsysteme bringen unter anderem Bauteile von Logistikbereichen, wie beispielsweise einem Materiallager, zu Arbeitsplätzen, wo die Bauteile verarbeitet werden. Gattungsgemäße mobile Transportsysteme sind in der Lage, leichte Steigungen oder Gefälle sowie kleine Bodenschwellen oder ähnliche Hindernisse zu überwinden.

Aus dem Dokument DE 10 2017 201 108 A1 ist ein gattungsgemäßes mobiles Transportsystem bekannt, welches als Flurförderfahrzeug ausgebildet ist und ein erstes Stützrad an einem vorderen Ende, ein zweites Stützrad an einem hinteren Ende sowie ein dazwischen angeordnetes Antriebsrad aufweist. Dabei ist das erste Stützrad an einem Fahrgestell angeordnet, während das zweite Stützrad und das Antriebsrad an einem Pendelrahmen angeordnet sind. Der Pendelrahmen ist dabei mittels einer horizontalen Pendelachse an dem Fahrgestell angelenkt.

Das Dokument EP 2 826 693 A2 offenbart einen Transportwagen zum Transport von Gegenständen. Der Transportwagen umfasst ein vorderes Chassisteil, das zwei vordere Räder eines vorderen Räderpaars je um deren Hochachse drehbar hält. Das vordere Chassisteil ist durch ein Gelenk mit einem als Wippe ausgebildeten hinteren Chassisteil verbunden, das zwei hintere Räder eines hinteren Räderpaars je um deren Hochachse drehbar hält, und das zwischen den vorderen Rädern und den hinteren Rädern ein mittleres Räderpaar je um deren Hochachse drehfest hält.

Aus der EP 3 130 522 A1 ist ein Rollcontainer zum Transport von Gegenständen bekannt. Der Rollcontainer weist vier Räder auf, wobei zwei Räder an einem Schwenkteil angeordnet sind, welches schwenkbar an einer Basis gelagert ist.

Aus der EP 2 236 391 A2 ist ein Transportwagen bekannt, welcher ein Fahrgestell mit vier Lenkrollen aufweist. Der Transportwagen umfasst zusätzlich zwei nicht-lenkbewegliche Laufrollen.

Aus der DE 10 2017 221 375 A1 ist ein Flurförderfahrzeug mit vier Rädern bekannt. Das Flurförderfahrzeug umfasst einen Fahrzeugrahmen und eine als Pendelachse ausgebildete Hinterachse.

Der Erfindung liegt daher die Aufgabe zugrunde, ein mobiles Transportsystem zum Transport von Gegenständen weiterzubilden. Dabei soll das mobile Transportsysteme insbesondere in der Lage sein, Bodenunebenheiten quer zu einer Fahrtrichtung auszugleichen.

Die Aufgabe wird durch ein mobiles Transportsystem mit den im Anspruch 1 angegebenen Merkmalen gelöst. Vorteilhafte Ausgestaltungen und Weiterbildungen sind Gegenstand der Unteransprüche.

Ein gattungsgemäßes mobiles Transportsystem zum Transport von Gegenständen in einer technischen Anlage umfasst einen Fahrzeugrahmen, ein erstes Räderpaar, ein zweites Räderpaar und ein drittes Räderpaar mit jeweils zwei Rädern. Die Räder sind dabei relativ zu dem Fahrzeugrahmen drehbar. Durch Drehung der Räder, welche Kontakt zu einem Boden haben, ist das mobile Transportsystem relativ zu dem Boden beweglich. Das mobile Transportsystem umfasst ferner einen Pendelrahmen, welcher um eine in Querrichtung verlaufende Pendelachse relativ zu dem Fahrzeugrahmen schwenkbar ist. Dabei sind die ersten Räder des ersten Räderpaars an dem Fahrzeugrahmen befestigt, und die zweiten Räder des zweiten Räderpaars sind an dem Pendelrahmen befestigt.

Erfindungsgemäß sind die dritten Räder des dritten Räderpaars an einem Kipprahmen befestigt, welcher um eine zumindest annähernd in Längsrichtung verlaufende Kippachse relativ zu dem Pendelrahmen schwenkbar ist. Vorzugweise verläuft die Kippachse genau in Längsrichtung.

Die Längsrichtung entspricht zumindest annähernd der gewöhnlichen Fahrtrichtung des mobilen Transportsystems. Die Längsrichtung verläuft rechtwinklig zu der Querrichtung. Die Längsrichtung und die Querrichtung stellen horizontale Richtungen dar und verlaufen parallel zu einem Boden, auf welchem sich das mobile Transportsystem befindet. Eine Vertikalrichtung steht senkrecht auf dem Boden und verläuft rechtwinklig zu der Längsrichtung und rechtwinklig zu der Querrichtung.

Durch die erfindungsgemäße Ausgestaltung des mobilen Transportsystems ist sichergestellt, dass die zweiten Räder des zweiten Räderpaars, die dritten Räder des dritten Räderpaars und mindestens ein erstes Rad des ersten Räderpaars ständig Kontakt zu dem Boden haben. Auch bei der Überwindung von Steigungen mit gleichzeitigen Bodenunebenheiten quer zu einer Fahrtrichtung haben somit stets mindestens fünf Räder des mobilen Transportsystems Kontakt zu dem Boden. Ferner haben die zweiten Räder des zweiten Räderpaars stets gleichen Anpressdruck auf den Boden. Auch die dritten Räder des dritten Räderpaars haben stets gleichen Anpressdruck auf den Boden. Ein Einsatz von Federn, um einen Anpressdruck der Räder auf den Boden zu erreichen, ist nicht erforderlich. In Abhängigkeit von der Beschaffenheit des Bodens verliert höchstens eines der ersten Räder des ersten Räderpaars den Kontakt zum Boden. Somit ist das mobile Transportsysteme in der Lage, Bodenunebenheiten quer zur Fahrtrichtung auszugleichen.

Erfindungsgemäß ist an den dritten Rädern des dritten Räderpaars jeweils eine Bremseinrichtung angeordnet, mittels welcher eine Drehung des jeweiligen dritten Rades um eine in horizontale Richtung verlaufende Drehachse bremsbar ist. Die dritten Räder mit den Bremseinrichtungen haben somit ständig Kontakt zu dem Boden. Damit ist eine Bremsung des mobilen Transportsystems annähernd unabhängig von der Beschaffenheit des Bodens jederzeit möglich. Zusätzliche Bremseinrichtungen an den ersten Rädern und/oder an den zweiten Rädern sind nicht erforderlich.

Erfindungsgemäß sind die Bremseinrichtungen elektromagnetisch betätigbar.

Vorteilhaft sind die ersten Räder des ersten Räderpaars jeweils als Stützräder ausgebildet und um eine in Vertikalrichtung verlaufende Schwenkachse relativ zu dem Fahrzeugrahmen schwenkbar und um eine in eine horizontale Richtung verlaufende Drehachse relativ zu dem Fahrzeugrahmen drehbar gelagert. Ebenso vorteilhaft sind die dritten Räder des dritten Räderpaars jeweils als Stützräder ausgebildet und um eine in Vertikalrichtung verlaufende Schwenkachse relativ zu dem Fahrzeugrahmen schwenkbar und um eine in eine horizontale Richtung verlaufende Drehachse relativ zu dem Fahrzeugrahmen drehbar gelagert. Derartig ausgebildete Stützräder sind verhältnismäßig kostengünstig und erleichtern zudem Kurvenfahrten des mobilen Transportsystems.

Gemäß einer vorteilhaften Ausgestaltung der Erfindung sind die zweiten Räder des zweiten Räderpaars als Antriebsräder ausgebildet und um eine in Querrichtung verlaufende Antriebsachse relativ zu dem Pendelrahmen drehbar gelagert und von einer Antriebseinheit antreibbar. Die Antriebseinheit umfasst beispielsweise einen Elektromotor, ein Differentialgetriebe und einen elektrischen Energiespeicher. Die Antriebsräder haben somit ständig Kontakt zu dem Boden. Damit ist eine Bewegung des mobilen Transportsystems annähernd unabhängig von der Beschaffenheit des Bodens jederzeit möglich.

Vorzugsweise sind die Räder eines Räderpaars dabei jeweils in Querrichtung versetzt zueinander angeordnet.

Gemäß einer bevorzugten Ausgestaltung der Erfindung ist ein Abstand der zweiten Räder des zweiten Räderpaars zueinander in Querrichtung größer als ein Abstand der ersten Räder des ersten Räderpaars zueinander in Querrichtung. Ebenso ist gemäß einer bevorzugten Ausgestaltung der Erfindung ein Abstand der zweiten Räder des zweiten Räderpaars zueinander in Querrichtung größer als ein Abstand der dritten Räder des dritten Räderpaars zueinander in Querrichtung. Die sechs Räder der drei Räderpaare sind beispielsweise in Form eines Sechsecks angeordnet, welches symmetrisch zu einer Längsachse ausgebildet ist. Die vier Räder des ersten Räderpaars und des zweiten Räderpaars bilden Eckpunkte eines Rechtecks. Die zweiten Räder des zweiten Räderpaars liegen in Querrichtung außerhalb dieses Rechtecks.

Vorzugsweise sind die zweiten Räder des zweiten Räderpaars in Längsrichtung zwischen den ersten Rädern des ersten Räderpaars und den dritten Rädern des dritten Räderpaars angeordnet.

Gemäß einer vorteilhaften Weiterbildung der Erfindung ist ein Abstand der zweiten Räder des zweiten Räderpaars in Längsrichtung zu der Pendelachse zumindest annähernd gleich einem Abstand der dritten Räder des dritten Räderpaars in Längsrichtung zu der Pendelachse. Die Pendelachse ist also in Längsrichtung zumindest annähernd mittig zwischen den zweiten Rädern des zweiten Räderpaars und den dritten Rädern des dritten Räderpaars angeordnet.

Dadurch haben die zweiten Räder des zweiten Räderpaars annähernd den gleichen Anpressdruck auf den Boden wie die dritten Räder des dritten Räderpaars. Dies ist insbesondere vorteilhaft, wenn die zweiten Räder des zweiten Räderpaars als Antriebsräder ausgebildet sind und an den dritten Rädern des dritten Räderpaars jeweils eine Bremseinrichtung angeordnet ist.

Gemäß einer bevorzugten Weiterbildung der Erfindung ist an dem Pendelrahmen, insbesondere zwischen den zweiten Rädern des zweiten Räderpaars, eine Empfangseinheit angeordnet, zu welcher Energie induktiv von einer Ladeeinheit übertragbar ist. Die Ladeeinheit ist beispielsweise als linienförmiger Leiter oder als Spule ausgebildet und befindet sich stationär in dem Boden. Die von der Ladeeinheit zu der Empfangseinheit induktiv übertragene Energie dient beispielsweise zum Laden eines elektrischen Energiespeichers des mobilen Transportsystems.

Gemäß einer vorteilhaften Weiterbildung der Erfindung ist an dem Pendelrahmen mindestens ein induktiver Sensor zur Detektion eines Magnetfeldes angeordnet. Wenn das Magnetfeld beispielsweise von einem in dem Boden verlegten linienförmigen Leiter erzeugt wird, so gestattet der induktive Sensor, dem besagten linienförmigen Leiter zu folgen um zu einem bestimmten Ziel zu gelangen.

Gemäß einer weiteren vorteilhaften Weiterbildung der Erfindung weist das mobile Transportsystem einen ersten Winkelmesser zur Erfassung eines Schwenkwinkels des Pendelrahmens um die Pendelachse relativ zu dem Fahrzeugrahmen auf. Durch die Erfassung des Schwenkwinkels des Pendelrahmens um die Pendelachse relativ zu dem Fahrzeugrahmen ist ermittelbar, wie groß eine anstehende Steigung in Fahrtrichtung ist. Bei Überschreiten eines zulässigen Schwenkwinkels ist von einer unzulässig großen Steigung auszugehen und es wird eine Warnmeldung ausgegeben oder das mobile Transportsystem wird angehalten.

Gemäß einer weiteren vorteilhaften Weiterbildung der Erfindung weist das mobile Transportsystem einen zweiten Winkelmesser zur Erfassung eines Schwenkwinkels des Kipprahmens um die Kippachse relativ zu dem Pendelrahmen auf. Durch die Erfassung des Schwenkwinkels des Kipprahmens um die Kippachse relativ zu dem Pendelrahmen ist ermittelbar, wie groß eine anstehende Bodenunebenheit quer zur Fahrtrichtung ist. Bei Überschreiten eines zulässigen Schwenkwinkels ist von einer unzulässig großen Bodenunebenheit auszugehen und es wird eine Warnmeldung ausgegeben oder das mobile Transportsystem wird angehalten.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine schematische Draufsicht auf ein mobiles Transportsystem,
- Figur 2:: eine schematische Seitenansicht des mobilen Transportsystems,
- Figur 3:: eine schematische Frontansicht des mobilen Transportsystems,
- Figur 4:: eine schematische Seitenansicht des mobilen Transportsystems beim Befahren einer Steigung,
- Figur 5:: eine schematische Seitenansicht des mobilen Transportsystems beim Befahren eines Gefälles,
- Figur 6:: eine schematische Seitenansicht des mobilen Transportsystems beim Befahren einer seitlich ansteigenden Schräge,
- Figur 7:: eine schematische Seitenansicht des mobilen Transportsystems beim Befahren einer seitlich abfallenden Schräge und
- Figur 8:: eine detaillierte Seitenansicht des mobilen Transportsystems.

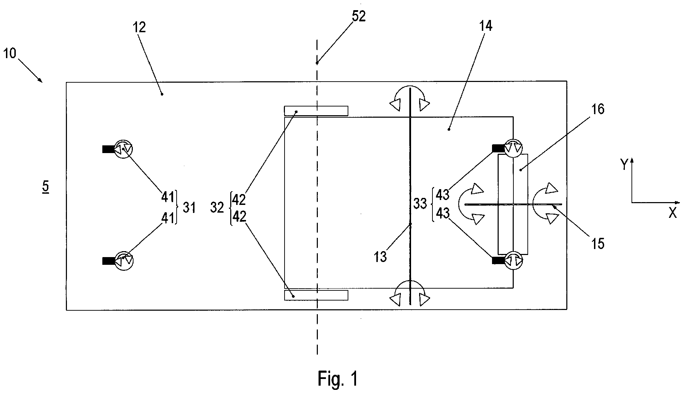

Figur 1 zeigt eine schematische Draufsicht auf ein mobiles Transportsystem 10. Das mobile Transportsystem 10 dient insbesondere zum Transport von Gegenständen in einer technischen Anlage. Bei der technischen Anlage handelt es sich um eine industrielle Anwendung, beispielsweise ein Produktionswerk. Bei dem mobilen Transportsystem 10 handelt es sich vorliegend um ein autonom fahrendes Fahrzeug. In der hier gezeigten Darstellung befindet sich das mobile Transportsystem 10 auf einem ebenen Boden 5 innerhalb der besagten technischen Anlage.

Das mobile Transportsystem 10 umfasst einen Fahrzeugrahmen 12, einen Pendelrahmen 14 und einen Kipprahmen 16. Der Fahrzeugrahmen 12 weist dabei einen annähernd rechteckförmigen Querschnitt auf und erstreckt sich vorwiegend in eine Längsrichtung X und in eine Querrichtung Y.

Die Längsrichtung X entspricht dabei zumindest annähernd der gewöhnlichen Fahrtrichtung des mobilen Transportsystems 10. Die Querrichtung Y verläuft rechtwinklig zu der Längsrichtung X. Die Längsrichtung X und die Querrichtung Y stellen horizontale Richtungen dar und verlaufen parallel zu dem ebenen Boden 5. Eine Vertikalrichtung Z steht senkrecht auf dem ebenen Boden 5 und verläuft somit rechtwinklig zu der Längsrichtung X und rechtwinklig zu der Querrichtung Y. Jede Richtung rechtwinklig zu der Vertikalrichtung Z stellt eine horizontale Richtung dar.

Der Pendelrahmen 14 ist um eine Pendelachse 13 relativ zu dem Fahrzeugrahmen 12 schwenkbar. Die Pendelachse 13 verläuft in Querrichtung Y. Der Kipprahmen 16 ist um eine Kippachse 15 relativ zu dem Pendelrahmen 14 schwenkbar. Die Kippachse 15 verläuft in der hier gezeigten Darstellung in Längsrichtung X.

An dem Fahrzeugrahmen 12 sind zwei erste Räder 41 eines ersten Räderpaars 31 befestigt, welche relativ zu dem Fahrzeugrahmen 12 drehbar sind. Die ersten Räder 41 sind in Querrichtung Y versetzt zueinander angeordnet. An dem Pendelrahmen 14 sind zwei zweite Räder 42 eines zweiten Räderpaars 32 befestigt, welche relativ zu dem Fahrzeugrahmen 12 drehbar sind. Die zweiten Räder 42 sind in Querrichtung Y versetzt zueinander angeordnet. An dem Kipprahmen 16 sind zwei dritte Räder 43 eines dritten Räderpaars 33 befestigt, welche relativ zu dem Fahrzeugrahmen 12 drehbar sind. Die dritten Räder 43 sind in Querrichtung Y versetzt zueinander angeordnet.

Ein Abstand der zweiten Räder 42 des zweiten Räderpaars 32 zueinander in Querrichtung Y ist größer als ein Abstand der ersten Räder 41 des ersten Räderpaars 31 zueinander in Querrichtung Y. Ein Abstand der zweiten Räder 42 des zweiten Räderpaars 32 zueinander in Querrichtung Y ist auch größer als ein Abstand der dritten Räder 43 des dritten Räderpaars 33 zueinander in Querrichtung Y. Die sechs Räder 41, 42, 43 sind vorliegend in Form eines Sechsecks angeordnet, welches symmetrisch zu einer Längsachse, welche in Längsrichtung X verläuft, ausgebildet ist.

Die zweiten Räder 42 des zweiten Räderpaars 32 sind als Antriebsräder ausgebildet und um eine in Querrichtung Y verlaufende Antriebsachse 52 relativ zu dem Pendelrahmen 14 drehbar gelagert. Das mobile Transportsystem 10 umfasst eine hier nicht dargestellte Antriebseinheit, mittels welcher die zweiten Räder 42 antreibbar sind. Die Antriebseinheit umfasst beispielsweise einen Elektromotor, ein Differentialgetriebe und einen elektrischen Energiespeicher.

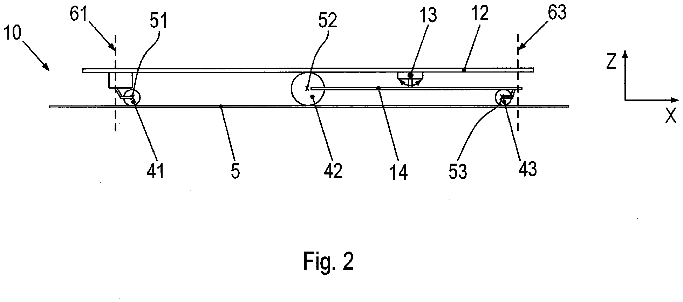

Figur 2 zeigt eine schematische Seitenansicht des mobilen Transportsystems 10. Die zweiten Räder 42 des zweiten Räderpaars 32 sind dabei in Längsrichtung X zwischen den ersten Rädern 41 des ersten Räderpaars 31 und den dritten Rädern 43 des dritten Räderpaars 33 angeordnet.

Die ersten Räder 41 des ersten Räderpaars 31 sind als Stützräder ausgebildet und jeweils um eine in Vertikalrichtung Z verlaufende erste Schwenkachse 61 relativ zu dem Fahrzeugrahmen 12 schwenkbar. Die ersten Räder 41 sind ferner jeweils um eine in eine horizontale Richtung verlaufende erste Drehachse 51 relativ zu dem Fahrzeugrahmen 12 drehbar gelagert. In der hier gezeigten Darstellung verlaufen die ersten Drehachsen 51 in Querrichtung Y. In Abhängigkeit von einer Schwenkung der ersten Räder 41 um die erste Schwenkachse 61 verlaufen die ersten Drehachsen 51 beispielsweise in Längsrichtung X oder in eine andere horizontale Richtung. Die erste Schwenkachse 61 und die erste Drehachse 51 eines ersten Rades 41 schneiden sich vorliegend nicht.

Die dritten Räder 43 des dritten Räderpaars 33 sind als Stützräder ausgebildet und jeweils um eine in Vertikalrichtung Z verlaufende dritte Schwenkachse 63 relativ zu dem Fahrzeugrahmen 12 schwenkbar. Die dritten Räder 41 sind ferner jeweils um eine in eine horizontale Richtung verlaufende dritte Drehachse 53 relativ zu dem Fahrzeugrahmen 12 drehbar gelagert. In der hier gezeigten Darstellung verlaufen die dritten Drehachsen 53 in Querrichtung Y. In Abhängigkeit von einer Schwenkung der dritten Räder 43 um die dritte Schwenkachse 63 verlaufen die dritten Drehachsen 53 beispielsweise in Längsrichtung X oder in eine andere horizontale Richtung. Die dritte Schwenkachse 63 und die dritte Drehachse 53 eines dritten Rades 43 schneiden sich vorliegend nicht.

Vorliegend ist ein Abstand der zweiten Räder 42 des zweiten Räderpaars 32 in Längsrichtung X zu der Pendelachse 13 annähernd gleich einem Abstand der dritten Räder 43 des dritten Räderpaars 33 in Längsrichtung X zu der Pendelachse 13. Der Abstand der zweiten Räder 42 zu der Pendelachse 13 in Längsrichtung X entspricht dabei dem Abstand der Antriebsachse 52 zu der Pendelachse 13 in Längsrichtung X. Der Abstand der dritten Räder 43 zu der Pendelachse 13 in Längsrichtung X entspricht dabei dem Abstand der dritten Schwenkachsen 63 zu der Pendelachse 13 in Längsrichtung X.

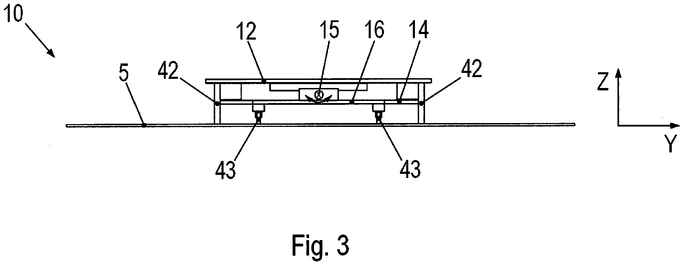

Figur 3 zeigt eine schematische Frontansicht des mobilen Transportsystems 10. Die ersten Räder 41 des ersten Räderpaars 31 sind dabei von den dritten Räder 43 des dritten Räderpaars 33 verdeckt und daher nicht sichtbar.

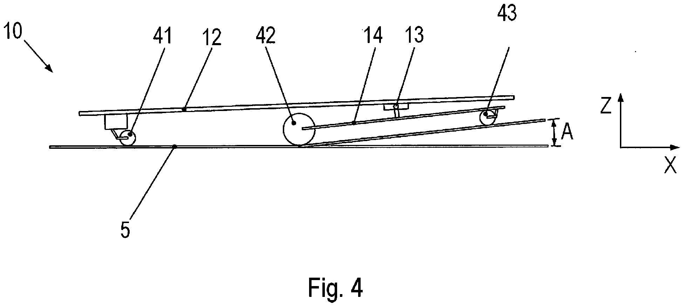

Figur 4 zeigt eine schematische Seitenansicht des mobilen Transportsystems 10 beim Befahren einer Steigung, welche in Bezug auf den ebenen Boden 5 um einen Winkel A geneigt ist. In der hier gezeigten Darstellung befinden sich die ersten Räder 41 auf dem ebenen Boden 5, die dritten Räder 43 befinden sich auf der Steigung, und die zweiten Räder 42 befinden sich am Übergang des ebenen Bodens 5 zu der Steigung. Der Pendelrahmen 14 ist um die Pendelachse 13 relativ zu dem Fahrzeugrahmen 12 geschwenkt. Die ersten Räder 41, die zweiten Räder 42 und die dritten Räder 43 haben Bodenkontakt.

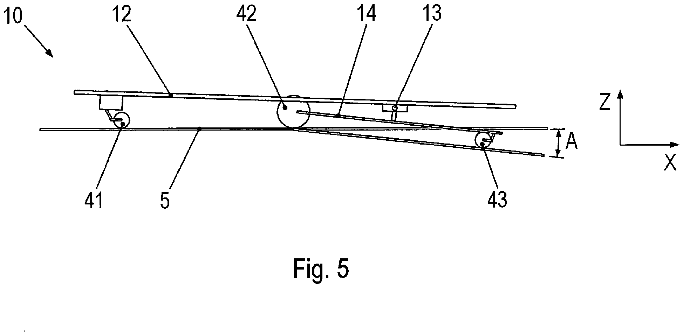

Figur 5 zeigt eine schematische Seitenansicht des mobilen Transportsystems 10 beim Befahren eines Gefälles, welches in Bezug auf den ebenen Boden 5 um einen Winkel A geneigt ist. In der hier gezeigten Darstellung befinden sich die ersten Räder 41 auf dem ebenen Boden 5, die dritten Räder 43 befinden sich auf dem Gefälle, und die zweiten Räder 42 befinden sich am Übergang des ebenen Bodens 5 zu dem Gefälle. Der Pendelrahmen 14 ist um die Pendelachse 13 relativ zu dem Fahrzeugrahmen 12 geschwenkt. Die ersten Räder 41, die zweiten Räder 42 und die dritten Räder 43 haben Bodenkontakt.

Wenn der Pendelrahmen 14, wie in Figur 4 und Figur 5 dargestellt, um die Pendelachse 13 relativ zu dem Fahrzeugrahmen 12 geschwenkt ist, so verläuft die hier nicht sichtbare Kippachse 15 leicht geneigt zu der Längsrichtung X. Diese Neigung der Kippachse 15 ist dabei jedoch verhältnismäßig gering. Die Kippachse 15 verläuft somit auch in diesem Fall noch annähernd in Längsrichtung X. Ebenso verlaufen die dritten Schwenkachsen 63 in diesem Fall leicht geneigt zu der Vertikalrichtung Z. Auch diese Neigung der dritten Schwenkachsen 63 ist verhältnismäßig gering.

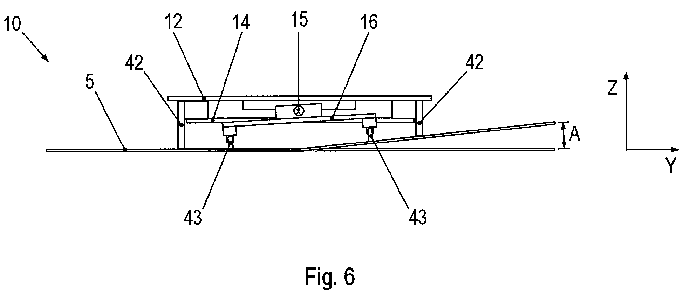

Figur 6 zeigt eine schematische Seitenansicht des mobilen Transportsystems 10 beim Befahren einer seitlich ansteigenden Schräge, welche in Bezug auf den ebenen Boden 5 um einen Winkel A geneigt ist. In der hier gezeigten Darstellung befinden sich die hier verdeckten ersten Räder 41 auf dem ebenen Boden 5. Auch die zweiten Räder 42 befinden sich auf dem ebenen Boden 5. Eines der dritten Räder 43 befindet sich auf dem ebenen Boden 5, das andere der dritten Räder 43 befindet sich auf der seitlich ansteigenden Schräge. Der Kipprahmen 16 ist um die Kippachse 15 relativ zu dem Pendelrahmen 14 geschwenkt. Die ersten Räder 41, die zweiten Räder 42 und die dritten Räder 43 haben Bodenkontakt.

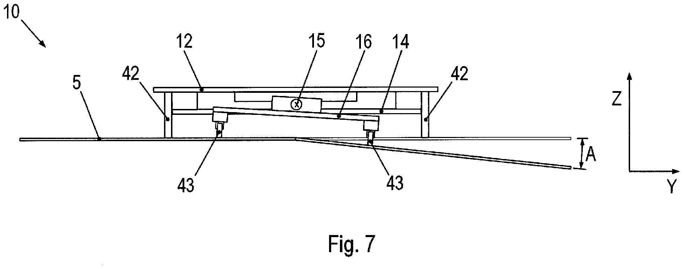

Figur 7 zeigt eine schematische Seitenansicht des mobilen Transportsystems 10 beim Befahren einer seitlich abfallenden Schräge, welche in Bezug auf den ebenen Boden 5 um einen Winkel A geneigt ist. In der hier gezeigten Darstellung befinden sich die hier verdeckten ersten Räder 41 auf dem ebenen Boden 5. Auch die zweiten Räder 42 befinden sich auf dem ebenen Boden 5. Eines der dritten Räder 43 befindet sich auf dem ebenen Boden 5, das andere der dritten Räder 43 befindet sich auf der seitlich abfallenden Schräge. Der Kipprahmen 16 ist um die Kippachse 15 relativ zu dem Pendelrahmen 14 geschwenkt. Die ersten Räder 41, die zweiten Räder 42 und die dritten Räder 43 haben Bodenkontakt.

Wenn der Kipprahmen 16, wie in Figur 6 und Figur 7 dargestellt, um die Kippachse 15 relativ zu dem Pendelrahmen 14 geschwenkt ist, so verlaufen die dritten Schwenkachsen 63 leicht geneigt zu der Vertikalrichtung Z. Diese Neigung der dritten Schwenkachsen 63 ist dabei jedoch verhältnismäßig gering. Ebenso verlaufen die dritten Drehachsen 53 in diesem Fall leicht geneigt zu einer horizontalen Richtung. Auch diese Neigung der dritten Drehachsen 53 ist verhältnismäßig gering.

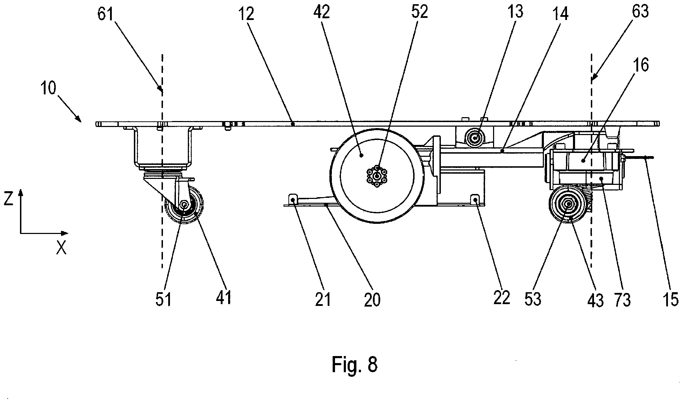

Figur 8 zeigt eine detaillierte Seitenansicht des mobilen Transportsystems 10. Die Darstellung entspricht der Darstellung in Figur 2, wobei jedoch zusätzliche Details des mobilen Transportsystems 10 gezeigt sind.

Das mobile Transportsystem 10 weist eine Empfangseinheit 20 auf, welche an dem Pendelrahmen 14 angeordnet ist, und zu welcher Energie induktiv von einer Ladeeinheit übertragbar ist. Die Ladeeinheit ist beispielsweise als linienförmiger Leiter oder als Spule ausgebildet. Die von der Ladeeinheit zu der Empfangseinheit 20 induktiv übertragene Energie dient beispielsweise zum Laden eines elektrischen Energiespeichers des mobilen Transportsystems 10. Die Empfangseinheit 20 befindet sich zwischen den zweiten Rädern 42.

Das mobile Transportsystem 10 weist ferner einen ersten induktiven Sensor 21 und einen zweiten induktiven Sensor 22 auf, welche an dem Pendelrahmen 14 angeordnet sind. Die induktiven Sensoren 21, 22 dienen zur Detektion eines Magnetfeldes. Wenn das Magnetfeld beispielsweise von einem in dem Boden verlegten linienförmigen Leiter erzeugt wird, so gestatten die induktiven Sensoren 21, 22, dem besagten linienförmigen Leiter zu folgen um zu einem bestimmten Ziel zu gelangen. Die induktiven Sensoren 21, 22 sind in Längsrichtung X versetzt zueinander angeordnet. Der erste induktive Sensor 21 befindet sich in Längsrichtung X zwischen der Antriebsachse 52 und den ersten Schwenkachsen 61. Der zweite induktive Sensor 22 befindet sich in Längsrichtung X zwischen der Antriebsachse 52 und den dritten Schwenkachsen 63. In Querrichtung Y befinden sich die induktiven Sensoren 21, 22 annähernd mittig zwischen den zweiten Rädern 42.

Das mobile Transportsystem 10 weist auch zwei Bremseinrichtungen 73 auf, wobei an den dritten Rädern 43 jeweils eine Bremseinrichtung 73 angeordnet ist. Mittels der Bremseinrichtung 73 ist eine Drehung des jeweiligen dritten Rades 43 um die in horizontale Richtung verlaufende dritte Drehachse 53 bremsbar. Die Bremseinrichtungen 73 sind vorliegend elektromagnetisch betätigbar.

### Bezugszeichenliste

- 5: ebener Boden
- 10: Mobiles Transportsystem
- 12: Fahrzeugrahmen
- 13: Pendelachse
- 14: Pendelrahmen
- 15: Kippachse
- 16: Kipprahmen
- 20: Empfangseinheit
- 21: erster induktiver Sensor
- 22: zweiter induktiver Sensor
- 31: erstes Räderpaar
- 32: zweites Räderpaar
- 33: drittes Räderpaar
- 41: erstes Rad
- 42: zweites Rad
- 43: drittes Rad
- 51: erste Drehachse
- 52: Antriebsachse
- 53: dritte Drehachse
- 61: erste Schwenkachse
- 63: dritte Schwenkachse
- 73: Bremseinrichtung
- A: Winkel
- X: Längsrichtung
- Y: Querrichtung
- Z: Vertikalrichtung

## Patentansprüche

1. Mobiles Transportsystem (10), zum Transport von Gegenständen in einer technischen Anlage, umfassend
einen Fahrzeugrahmen (12),
ein erstes Räderpaar (31), ein zweites Räderpaar (32) und ein drittes Räderpaar (33) mit jeweils zwei Rädern (41, 42, 43),
welche relativ zu dem Fahrzeugrahmen (12) drehbar sind, und
einen Pendelrahmen (14), welcher um eine in Querrichtung (Y) verlaufende Pendelachse (13) relativ zu dem Fahrzeugrahmen (12) schwenkbar ist, wobei
die ersten Räder (41) des ersten Räderpaars (31) an dem Fahrzeugrahmen (12) befestigt sind, und
die zweiten Räder (42) des zweiten Räderpaars (32) an dem Pendelrahmen (14) befestigt sind, **dadurch gekennzeichnet, dass**
die dritten Räder (43) des dritten Räderpaars (33) an einem Kipprahmen (16) befestigt sind, welcher um eine zumindest annähernd in Längsrichtung (X) verlaufende Kippachse (15) relativ zu dem Pendelrahmen (14) schwenkbar ist, und dass
an den dritten Rädern (43) des dritten Räderpaars (33) jeweils eine Bremseinrichtung (73) angeordnet ist, mittels welcher eine Drehung des jeweiligen dritten Rades (43) um eine in horizontale Richtung verlaufende Drehachse (53) bremsbar ist, und dass die Bremseinrichtungen (73) elektromagnetisch betätigt sind.

2. Mobiles Transportsystem (10) nach Anspruch 1, **dadurch gekennzeichnet, dass**
die ersten Räder (41) des ersten Räderpaars (31) und/oder die dritten Räder (43) des dritten Räderpaars (33) jeweils als Stützräder ausgebildet sind und
um eine in Vertikalrichtung (Z) verlaufende Schwenkachse (61, 63) relativ zu dem Fahrzeugrahmen (12) schwenkbar und
um eine in eine horizontale Richtung verlaufende Drehachse (51, 53) relativ zu dem Fahrzeugrahmen (12) drehbar gelagert sind.

3. Mobiles Transportsystem (10) nach mindestens einem der vorangegangenen Ansprüche, **dadurch gekennzeichnet, dass**
die zweiten Räder (42) des zweiten Räderpaars (32) als Antriebsräder ausgebildet sind und um eine in Querrichtung (Y) verlaufende Antriebsachse (52) relativ zu dem Pendelrahmen (14) drehbar gelagert und von einer Antriebseinheit antreibbar sind.

4. Mobiles Transportsystem (10) nach mindestens einem der vorangegangenen Ansprüche, **dadurch gekennzeichnet, dass**
die Räder (41, 42, 43) eines Räderpaars (31, 32, 33) jeweils in Querrichtung (Y) versetzt zueinander angeordnet sind.

5. Mobiles Transportsystem (10) nach mindestens einem der vorangegangenen Ansprüche, **dadurch gekennzeichnet, dass**
ein Abstand der zweiten Räder (42) des zweiten Räderpaars (32) zueinander in Querrichtung (Y) größer ist als ein Abstand der ersten Räder (41) des ersten Räderpaars (31) zueinander in Querrichtung (Y) und/oder dass
ein Abstand der zweiten Räder (42) des zweiten Räderpaars (32) zueinander in Querrichtung (Y) größer ist als ein Abstand der dritten Räder (43) des dritten Räderpaars (33) zueinander in Querrichtung (Y).

6. Mobiles Transportsystem (10) nach mindestens einem der vorangegangenen Ansprüche, **dadurch gekennzeichnet, dass**
die zweiten Räder (42) des zweiten Räderpaars (32) in Längsrichtung (X) zwischen den ersten Rädern (41) des ersten Räderpaars (31) und den dritten Rädern (43) des dritten Räderpaars (33) angeordnet sind.

7. Mobiles Transportsystem (10) nach mindestens einem der vorangegangenen Ansprüche, **dadurch gekennzeichnet, dass**
ein Abstand der zweiten Räder (42) des zweiten Räderpaars (32) in Längsrichtung (X) zu der Pendelachse (13) zumindest annähernd gleich einem Abstand der dritten Räder (43) des dritten Räderpaars (33) in Längsrichtung (X) zu der Pendelachse (13) ist.

8. Mobiles Transportsystem (10) nach mindestens einem der vorangegangenen Ansprüche, **dadurch gekennzeichnet, dass**
an dem Pendelrahmen (14) eine Empfangseinheit (20) angeordnet ist, zu welcher Energie induktiv von einer Ladeeinheit übertragbar ist.

9. Mobiles Transportsystem (10) nach mindestens einem der vorangegangenen Ansprüche, **dadurch gekennzeichnet, dass**
an dem Pendelrahmen (14) mindestens ein induktiver Sensor (21, 22) zur Detektion eines Magnetfeldes angeordnet ist.

10. Mobiles Transportsystem (10) nach mindestens einem der vorangegangenen Ansprüche, **dadurch gekennzeichnet, dass**
das mobile Transportsystem (10) einen ersten Winkelmesser zur Erfassung eines Schwenkwinkels des Pendelrahmens (14) um die Pendelachse (13) relativ zu dem Fahrzeugrahmen (12) aufweist.

11. Mobiles Transportsystem (10) nach mindestens einem der vorangegangenen Ansprüche, **dadurch gekennzeichnet, dass**
das mobile Transportsystem (10) einen zweiten Winkelmesser zur Erfassung eines Schwenkwinkels des Kipprahmens (16) um die Kippachse (15) relativ zu dem Pendelrahmen (14) aufweist.

## Claims

1. Mobile transport system (10) for transporting objects in a technical facility, comprising
a vehicle frame (12),
a first wheel pair (31), a second wheel pair (32) and a third wheel pair (33), each having two wheels (41, 42, 43),
which are rotatable relative to the vehicle frame (12), and
a swing frame (14), which is pivotable relative to the vehicle frame (12) about a swing axle (13) that extends in a transverse direction (Y), wherein
the first wheels (41) of the first wheel pair (31) are attached to the vehicle frame (12), and
the second wheels (42) of the second wheel pair (32) are attached to the swing frame (14),
**characterized in that**
the third wheels (43) of the third wheel pair (33) are attached to a tilting frame (16), which is pivotable relative to the swing frame (14) about a tilt axle (15) that extends at least approximately in the longitudinal direction (X), and **in that** arranged at each of the third wheels (43) of the third wheel pair (33) is a braking device (73), by means of which a rotation of the respective third wheel (43) about an axis of rotation (53) that extends in a horizontal direction can be braked, and **in that**
the braking devices (73) are electromagnetically actuated.

2. Mobile transport system (10) according to claim 1, **characterized in that**
the first wheels (41) of the first wheel pair (31) and/or the third wheels (43) of the third wheel pair (33) are each designed as support wheels, and
are swivelable relative to the vehicle frame (12) about a swivel axis (61, 63) that extends in a vertical direction (Z), and are mounted in such a way as to be rotatable relative to the vehicle frame (12) about an axis of rotation (51, 53) that extends in a horizontal direction.

3. Mobile transport system (10) according to at least one of the preceding claims,
**characterized in that**
the second wheels (42) of the second wheel pair (32) are designed as drive wheels, and
are mounted in such a way as to be rotatable relative to the swing frame (14) about a drive axis (52) that extends in the transverse direction (Y), and can be driven by a drive unit.

4. Mobile transport system (10) according to at least one of the preceding claims,
**characterized in that**
the wheels (41, 42, 43) of each wheel pair (31, 32, 33) are arranged offset from each other in the transverse direction (Y).

5. Mobile transport system (10) according to at least one of the preceding claims,
**characterized in that**
a distance between the second wheels (42) of the second wheel pair (32) in the transverse direction (Y) is greater than a distance between the first wheels (41) of the first wheel pair (31) in the transverse direction (Y), and/or **in that** a distance between the second wheels (42) of the second wheel pair (32) in the transverse direction (Y) is greater than a distance between the third wheels (43) of the third wheel pair (33) in the transverse direction (Y).

6. Mobile transport system (10) according to at least one of the preceding claims,
**characterized in that**
the second wheels (42) of the second wheel pair (32) are arranged between the first wheels (41) of the first wheel pair (31) and the third wheels (43) of the third wheel pair (33) in the longitudinal direction (X).

7. Mobile transport system (10) according to at least one of the preceding claims,
**characterized in that**
a distance of the second wheels (42) of the second wheel pair (32) from the swing axle (13) in the longitudinal direction (X) is at least approximately equal to a distance of the third wheels (43) of the third wheel pair (33) from the swing axle (13) in the longitudinal direction (X).

8. Mobile transport system (10) according to at least one of the preceding claims,
**characterized in that**
arranged on the swing frame (14) is a receiving unit (20), to which energy can be inductively transferred from a charging unit.

9. Mobile transport system (10) according to at least one of the preceding claims,
**characterized in that**
at least one inductive sensor (21, 22) for detecting a magnetic field is arranged on the swing frame (14).

10. Mobile transport system (10) according to at least one of the preceding claims,
**characterized in that**
the mobile transport system (10) comprises a first angle measuring means for detecting a pivot angle of the swing frame (14) relative to the vehicle frame (12) about the swing axle (13).

11. Mobile transport system (10) according to at least one of the preceding claims,
**characterized in that**
the mobile transport system (10) comprises a second angle measuring means for detecting a pivot angle of the tilting frame (16) relative to the swing frame (14) about the tilt axle (15).

## Revendications

1. Système de transport mobile (10), pour le transport d'objets au sein d'une installation technique, comprenant
un châssis de véhicule (12),
une première paire de roues (31), une deuxième paire de roues (32) et une troisième paire de roues (33) avec respectivement deux roues (41, 42, 43),
qui peuvent tourner par rapport au châssis de véhicule (12), et
un cadre de pendule (14) qui peut pivoter par rapport au châssis de véhicule (12) autour d'un axe de pendule (13) s'étendant dans une direction transversale (Y),
les premières roues (41) de la première paire de roues (31) étant fixées au châssis de véhicule (12), et
les deuxièmes roues (42) de la deuxième paire de roues (32) étant fixées au cadre de pendule (14),
**caractérisé en ce que**
les troisièmes roues (43) de la troisième paire de roues (33) sont fixées à un cadre basculant (16) qui peut pivoter par rapport au cadre de pendule (14) autour d'un axe de basculement (15) s'étendant au moins approximativement dans une direction longitudinale (X), et **en ce que**
respectivement un dispositif de freinage (73) est agencé au niveau des troisièmes roues (43) de la troisième paire de roues (33), au moyen duquel une rotation de la troisième roue (42) respective autour d'un axe de rotation (53) s'étendant dans la direction horizontale peut être freinée, et **en ce que**
les dispositifs de freinage (73) sont à commande électromagnétique.

2. Système de transport mobile (10) selon la revendication 1, **caractérisé en ce que** les premières roues (41) de la première paire de roues (31) et/ou les troisièmes roues (43) de la troisième paire de roues (33) sont conçues chacune sous la forme de roues de support et peuvent pivoter par rapport au châssis de véhicule (12) autour d'un axe de pivotement (61, 63) s'étendant dans une direction verticale (Z) et
sont respectivement montées rotatives par rapport au châssis de véhicule (12) autour d'un axe de rotation (51, 53) s'étendant dans une direction horizontale.

3. Système de transport mobile (10) selon au moins l'une quelconque des revendications précédentes, **caractérisé en ce que**
les deuxièmes roues (42) de la deuxième paire de roues (32) sont conçues sous la forme de roues motrices et sont montées rotatives par rapport au cadre de pendule (14) autour d'un axe d'entraînement (52) s'étendant dans la direction transversale (Y) et peuvent être entraînées par une unité d'entraînement.

4. Système de transport mobile (10) selon au moins l'une quelconque des revendications précédentes, **caractérisé en ce que**
les roues (41, 42, 43) d'une paire de roues (31, 32, 33) sont respectivement agencées de manière décalée l'une par rapport à l'autre dans la direction transversale (Y).

5. Système de transport mobile (10) selon au moins l'une quelconque des revendications précédentes, **caractérisé en ce que**
une distance entre les deuxièmes roues (42) de la deuxième paire de roues (32) dans la direction transversale (Y) est supérieure à une distance entre les deux premières roues (41) de la première paire de roues (31) dans la direction transversale (Y), et/ou **en ce que**
une distance entre les deuxièmes roues (42) de la deuxième paire de roues (32) dans la direction transversale (Y) est supérieure à une distance entre les troisièmes roues (43) de la troisième paire de roues (33) dans la direction transversale (Y).

6. Système de transport mobile (10) selon au moins l'une quelconque des revendications précédentes, **caractérisé en ce que**
les deuxièmes roues (42) de la deuxième paire de roues (32) sont agencées longitudinalement (X) entre les premières roues (41) de la première paire de roues (31) et les troisièmes roues (43) de la troisième paire de roues (33).

7. Système de transport mobile (10) selon au moins l'une quelconque des revendications précédentes, **caractérisé en ce que**
une distance des deuxièmes roues (42) de la deuxième paire de roues (32) dans la direction longitudinale (X) par rapport à l'axe de pendule (13) est au moins approximativement égale à une distance des troisièmes roues (43) de la troisième paire de roues (33) dans la direction longitudinale (X) par rapport à l'axe de pendule (13).

8. Système de transport mobile (10) selon au moins l'une quelconque des revendications précédentes, **caractérisé en ce que**
une unité de réception (20) est agencée sur le cadre pendulaire (14), à laquelle de l'énergie peut être transférée par induction à partir d'une unité de charge.

9. Système de transport mobile (10) selon au moins l'une quelconque des revendications précédentes, **caractérisé en ce que**
au moins un capteur inductif (21, 22) pour la détection d'un champ magnétique est agencé sur le cadre de pendule (14).

10. Système de transport mobile (10) selon au moins l'une quelconque des revendications précédentes, **caractérisé en ce que**
le système de transport mobile (10) présente un premier dispositif de mesure d'angle pour détecter un angle de pivotement du cadre de pendule (14) autour de l'axe de pendule (13) par rapport au cadre de véhicule (12).

11. Système de transport mobile (10) selon au moins l'une quelconque des revendications précédentes, **caractérisé en ce que**
le système de transport mobile (10) présente un second dispositif de mesure d'angle pour détecter un angle de pivotement du cadre basculant (16) autour de l'axe de basculement (15) par rapport au cadre de pendule (14).
